# EUROPÄISCHE PATENTSCHRIFT

(11) **EP 0 730 399 B1**
(45) Veröffentlichungstag und Bekanntmachung des Hinweises auf die Patenterteilung: **23.07.1997**
(21) Anmeldenummer: 95900683.4
(22) Anmeldetag: 09.11.1994
(51) Int. Cl.: A01D 17/06, A01D 33/08, B07B 1/15

(54) **VORRICHTUNG ZUM TRENNEN VON KARTOFFELN VON BEIMENGUNGEN**
DEVICE FOR SEPARATING POTATOES FROM OTHER MATERIALS
DISPOSITIF POUR SEPARER LES POMMES DE TERRES D'AUTRES MATIERES

(30) Priorität: 25.11.1993 DE 4340101
(43) Veröffentlichungstag der Anmeldung: 11.09.1996
(73) Patentinhaber: Franz Grimme Landmaschinenfabrik GmbH & Co. KG., D-49401 Damme (DE)
(72) Erfinder: KALVERKAMP, Klemens, 49401 Damme (DE); TEPE, Richard, 49401 Damme (DE)
(74) Vertreter: Busse & Busse Patentanwälte
(86) Internationale Anmeldenummer: EP9403682
(87) Internationale Veröffentlichungsnummer: WO9514370

(56) Entgegenhaltungen:
- EP-A- 0 303 226
- DE-U- 8 521 009
- FR-A- 1 228 425
- FR-A- 2 511 575
- NL-A- 8 301 038

## Beschreibung

Die Erfindung bezieht sich auf eine Vorrichtung zum Trennen von Kartoffeln von Beimengungen in einer Ausbildung gemäß dem Oberbegriff des Anspruchs 1.

Bei einer bekannten Vorrichtung dieser Art (FR-A-1 228 425) sind sämtliche Walzenkörper zylindrisch ausgebildet. Sie trennen Kartoffeln von Beimengungen wie Erdreich, Kluten, Steinen, Kraut od.dgl., im Bereich des Arbeitsspaltes zwischen den gegenläufig umlaufenden Walzenkörpern, die auf die Kartoffeln während eines jeden Umlaufes einen gleichmäßigen Fördervorschub ausüben.

Der Erfindung liegt die Aufgabe zugrunde, eine Vorrichtung der im Oberbegriff des Anspruchs 1 genannten Art zu schaffen, die mit geringem technischen Aufwand ausführbar ist und einen auch bei unterschiedlichen Gemischen von Kartoffeln und Beimengungen optimalen Trennvorgang ermöglicht.

Die Erfindung löst diese Aufgabe durch eine Vorrichtung zum Trennen von Kartoffeln von Beimengungen mit den Merkmalen des Anspruchs 1. Hinsichtlich wesentlicher weiterer Ausgestaltungen wird auf die Ansprüche 2 bis 26 verwiesen.

Mit der erfindungsgemäß ausgebildeten Vorrichtung ist mit geringem technischen Aufwand eine Baueinheit geschaffen, die bei stabiler seitlicher Lagerung der Walzenkörper überaus störunanfällig ist und die Kartoffeln in geringer Berührungszeit so von den Beimengungen trennt, daß Beschädigungen bzw. Qualitätsbeeinträchtigungen vermieden sind. Die Trennstrecke ist dabei mit geringem Aufwand an unterschiedliche Trennaufgaben anpaßbar, wobei die Aggressivität der Trennwirkung sowohl durch eine Abstandsveränderung zwischen den Walzenkörpern als auch durch eine Veränderung der Höhenlage der Trennwalzen zueinander einstellbar sein kann.

Die besondere Querschnittsform der jeweils ersten Walzenkörper jeder Gruppe vermittelt den Kartoffeln einen zeitweilig verstärkten Fördervorschub, durch den die Trennwirkung verstärkt und der Durchsatz erhöht wird. Dabei werden auch unterschiedlichste Beimengungen sicher erfaßt, während die Kartoffeln einen schonenden Förderimpuls erhalten. Die Kartoffeln werden dabei ohne zusätzliche Hilfsmittel vom jeweiligen Gutaufgabeende zum Kartoffelabgabeende bewegt.

Weitere Einzelheiten und Vorteile ergeben sich aus der nachfolgenden Beschreibung und der Zeichnung, die mehrere Ausführungsbeispiele einer erfindungsgemäßen Vorrichtung zum Trennen von Kartoffeln von Beimengungen schematisch veranschaulicht. In der Zeichnung zeigen:
- Fig. 1: eine Seitenansicht der erfindungsgemäßen Vorrichtung in einer ersten Ausführungsform,
- Fig. 2: eine Seitenansicht der Vorrichtung ähnlich Fig. 1 in einer zweiten Ausführungsform mit einer einen Absatz bildenden Anordnung von Walzenkörpern,
- Fig. 3: eine Seitenansicht ähnlich Fig. 2 der Vorrichtung in einer Schwenkstellung,
- Fig. 4: eine Vorderansicht der Vorrichtung im Bereich des Kartoffelabgabeendes,
- Fig. 5: eine vergrößerte Ausschnittsdarstellung der Vorrichtung zur Veranschaulichung einer ersten Ausführung einer Verstellvorrichtung,
- Fig. 6: eine Ausschnittsdarstellung zur Veranschaulichung einer zweiten Ausführungsform der Verstellvorrichtung,
- Fig. 7: eine Draufsicht auf die Darstellung gemäß Fig. 6,
- Fig. 8: eine Ausschnittsdarstellung zur Veranschaulichung einer dritten Ausführungsform der Verstellvorrichtung,
- Fig. 9: eine Draufsicht der Darstellung gemäß Fig. 8,
- Fig. 10: eine Ausschnittsdarstellung zur Veranschaulichung einer vierten Ausführungsform der Verstellvorrichtung,
- Fig. 11: eine Draufsicht der Darstellung gemäß Fig. 10,
- Fig. 12: eine vergrößerte Einzeldarstellung einer der Walzenkörper in einer Seitenansicht,
- Fig. 13: eine Seitenansicht ähnlich Fig. 12 mit veränderten Profilansätzen an der Mantelfläche des Walzenkörpers,
- Fig. 14: ein Schnitt durch einen der einen Walzenkörper bildenden Abschnitte, und
- Fig. 15: eine vergrößerte Ausschnittsdarstellung im Bereich des Arbeitsspaltes einer Gruppe von Walzenkörpern.

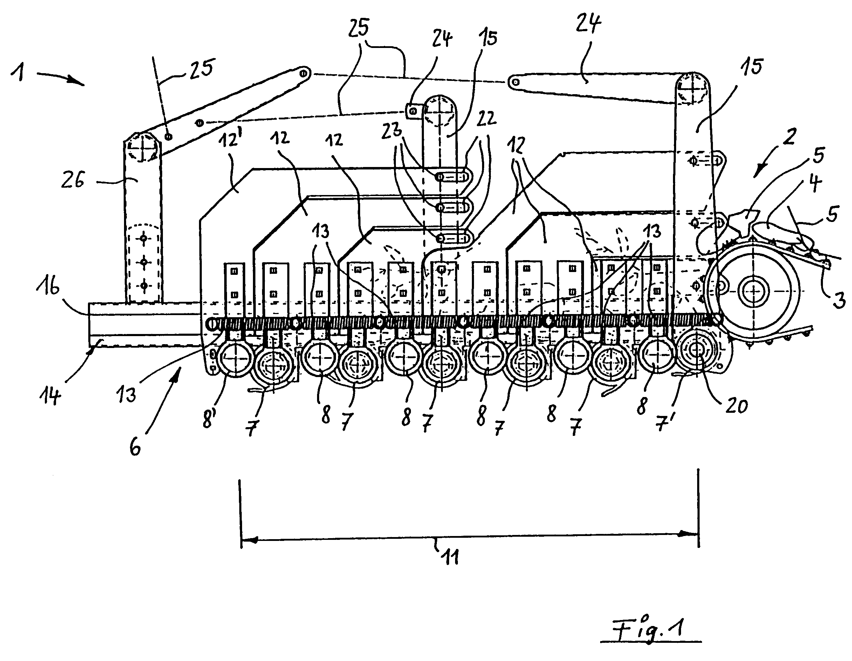

In Fig. 1 ist eine insgesamt mit 1 bezeichnete, beispielsweise an einer Kartoffelerntemaschine (nicht dargestellt) vorgesehene Vorrichtung in einer ersten Ausführungsform veranschaulicht, der in der dargestellten Arbeitsstellung im Bereich eines Gutaufgabeendes 2 mittels eines Förderbandes 3 ein Gemisch von Kartoffeln 4 und Beimengungen 5, z.B. Erdreich, Steinen und Kraut, aufgegeben wird.

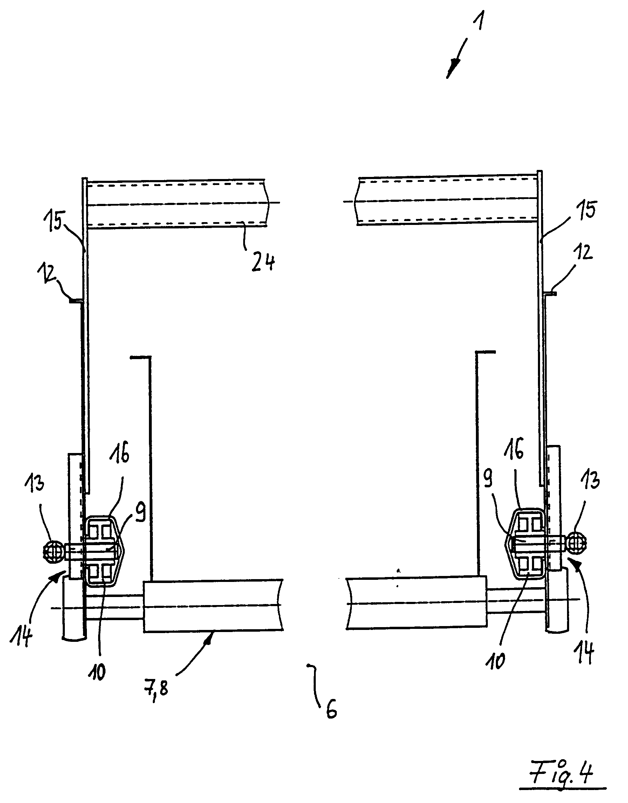

In vorteilhafter Ausbildung weist die Vorrichtung 1 eine Anzahl von paarweise gegenläufig angetriebenen Walzenkörpern 7,7',8,8' auf, die quer (Fig. 4) zu einer Trennstrecke 11 ausgerichtet sind. Der in Richtung der Trennstrecke 11 zu einem Kartoffelabgabeende 6 hin jeweils erste Walzenkörper 7,7' und der jeweilige zweite Walzenkörper 8,8' jedes Paares bilden eine zusammenwirkende Gruppe. Dabei ist der zweite Walzenkörper 8,8' jeder Gruppe zusammen mit dem ersten Walzenkörper 7 der nachfolgend benachbarten Gruppe jeweils mit einem beweglichen Tragteil 12 abgestützt, an dem jeweils unter Wirkung einer Feder 13 ein an einem Vorrichtungsgestell 14 abgestütztes Stellglied 15 angreift.

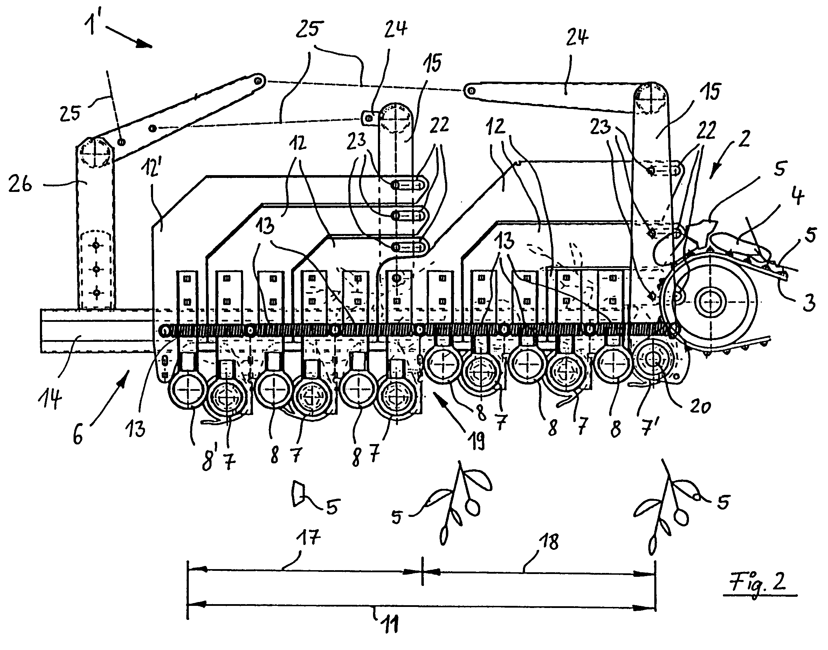

In Fig. 2 ist eine zweite Ausführungsform der erfindungsgemäßen Vorrichtung 1' veranschaulicht, wobei diese im Bereich der Trennstrecke 11 in zwei Teilbereiche 17,18 mit einer Abstufung 19 unterteilt ist, die zwischen dem Gutaufgabeende 2 und dem Kartoffelabgabeende 6 einen Förderbereich mit einer zusätzlichen Lockerungswirkung für das Gemisch 4,5 bildet.

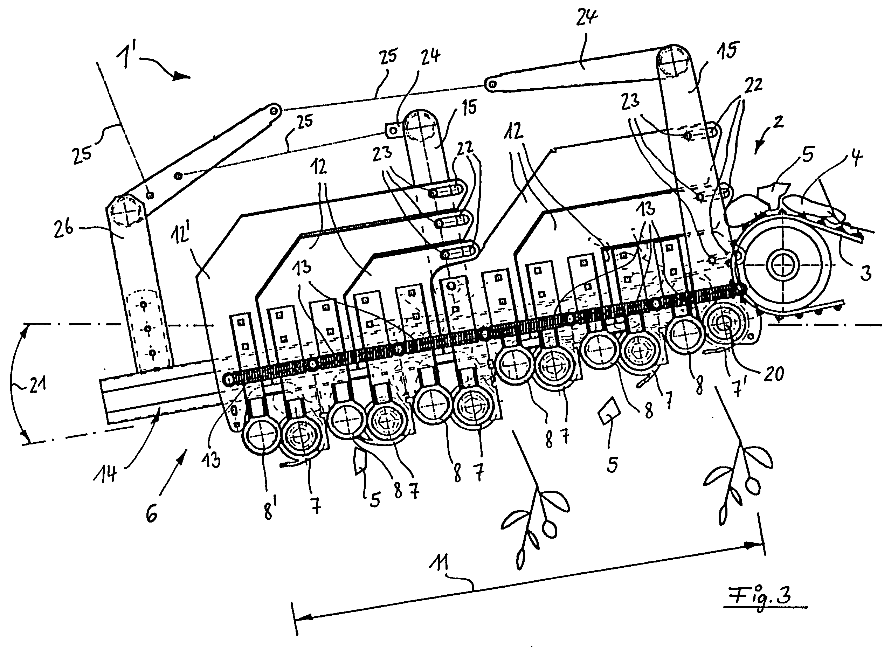

In Fig. 3 ist die Vorrichtung 1' in einer Schwenkstellung dargestellt, in der die Trennstrecke 11 aus der horizontalen Arbeitsstellung (Fig. 1, Fig. 2) um einen Schwenkwinkel 21 so verstellt ist, daß sie eine vom Gutaufgabeende 2 zum Kartoffelabgabeende 6 hin gerichtete Neigung aufweist. Mit dieser Schwenkmöglichkeit kann die Trennstrecke 11 mit geringem Aufwand durch eine Verstellung um eine im Bereich des ersten Walzenkörpers 7' befindliche Schwenkachse 20 so positioniert werden, daß bei unterschiedlichen Bodenstrukturen bzw. Beimengungen eine stufenlose Regulierung des Durchsatzes der Vorrichtung erreichbar ist. Ebenso ist denkbar, auch die Vorrichtung 1 gemäß Fig. 1 mit einer Schwenkachse 20 im Bereich des Walzenkörpers 7' auszubilden.

Die Ausführungen gemäß Fig. 1 und 2 erlauben mittels der Tragteile 12 und der Stellglieder 15 eine Verstellung der Arbeitsabstände zwischen den Achsen der Walzenkörper 7,7',8,8' innerhalb jeder Gruppe. Ausgehend von dem ortsfesten ersten Walzenköper 7' in der Trennstrecke 11 sind die jeweils nachgeordneten Walzenkörper 8,7 jeweils zu einer Verstellgruppe über eines der Tragteile 12 zusammengefaßt und gemeinsam verstellbar. Das Tragteil 12' ist dabei nur mit dem letzten Walzenkörper 8' in der Trennstrecke 11 verbunden.

Die Tragteile 12 sind hierzu gruppenweise im Bereich eines jeweiligen Langloches 22 über einen Führungsbolzen 23 derart an ihrem zugeordneten Stellglied 15 abgestützt, daß eine gleichzeitige Verstellung der Abstände zwischen den zur Gruppe gehörenden Tragteilen 12 und damit den von diesen abgestützten Walzenkörpern 7,8 erreichbar ist. Die Stellglieder 15 sind jeweils mittels nur schematisch dargestellter Antriebe 25 betätigbar, die an Anschlußteilen 24 an den Stellhebeln 15 einerseits und an einer ortsfesten Stütze 26 andererseits angreifen. Durch Verschwenken der Stellglieder 15 erfolgt die Bildung gleichgroßer Arbeitsabstände zwischen den Walzenkörpern 7,7',8,8' entlang der Gruppen, die entlang der Führungsschienen 16 des Vorrichtungsgestells 14 zum Kartoffelabgabeende 6 hin verschoben werden. Durch ein konstantes Verhältnis der Höhenabstände der jeweiligen Führungsbolzen 23 einer jeweiligen Gruppe von Tragteilen 12 ist mit einfachen Mitteln die Gleichheit der Veränderung der Arbeitsabstände bei Bewegung des Stellgliedes 15 erreicht.

Für die Durchführung der Verschiebebewegung sind die Tragglieder 12 mit Rollen 10 versehen, die sich in den Führungsschienen 16 abstützen (Fig. 4). An den Achsbolzen 9 der Rollen 10 greifen die Federn 13 an, die gegen ihre Wirkung eine Achsabstandsvergrößerung zulassen, wenn diese mittels der Stellglieder 15 herbeigeführt wird, oder wenn eine solche durch einen einen Walzenspalt passierenden dicken Stein 5 hervorgerufen wird. Die Verschiebbarkeit der Tragteile 12 längs der Führungsschienen 16 ist dabei unabhängig von der Stellung der Stellglieder 15 infolge der Langlöcher 22 möglich.

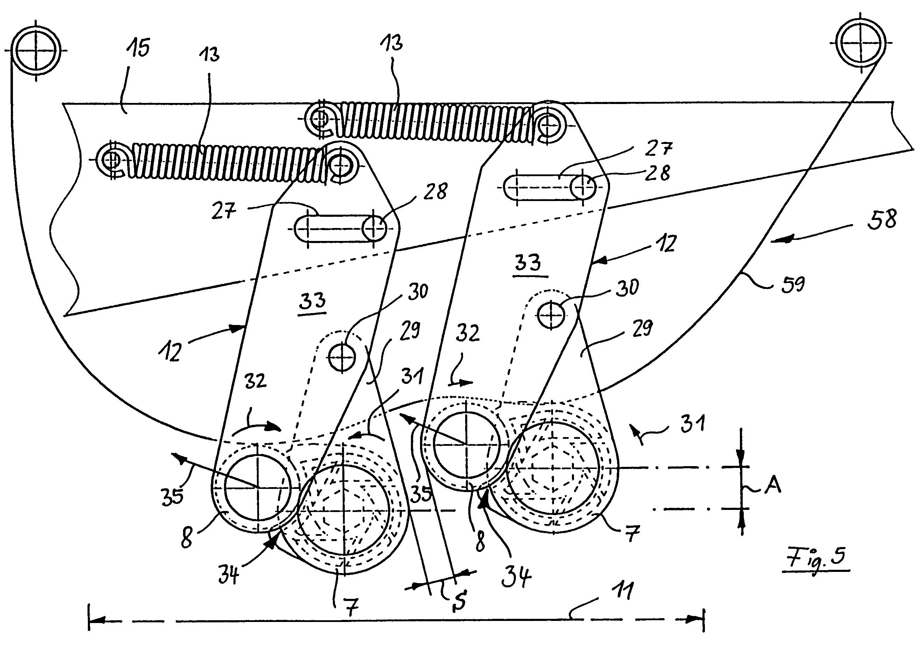

Fig. 5 zeigt in einer vergrößerten Ausschnittsdarstellung von zwei Gruppen von Walzenkörpern 7,8 eine abgewandelte Abstützung der Walzenkörper. Bei dieser sind die Walzenkörper von Tragteilen 12 getragen, die aus einem ortsfesten Zwischenglied 29 für den jeweils ersten Walzenkörper 7 und einem um einen Gelenkzapfen 30 schwenkbaren Schwenkglied 33 bestehen, an dem der jeweils zweite Walzenkörper 8 gelagert ist. Das als Schiebeteil ausgebildete Stellglied 15 stützt einzelne Federn 13 ab, die jeweils an einem Schwenkglied 33 angreifen. Die Schwenkglieder 33 weisen im Bereich der Verbindung mit dem Stellglied 15 ein Langloch 27 auf, in das ein Führungsbolzen 28 des Stellgliedes 15 eingreift. Dabei wird das Schwenkglied 33 durch die Feder 13 in die vorgegebene Arbeitsstellung gezogen.

Bei dieser Anordnung kann ein zwischen die gegenläufig in Pfeilrichtungen 31,32 umlaufenden Walzenkörper 7,8 in den Arbeitsspalt 34 eingezogener großer Stein 5 oder dgl. Beimengung den zweiten Walzenkörper 8 in einer Schwenkrichtung 35 derart verlagern, daß der große Stein ohne Beschädigung der Vorrichtung nach unten aus der Vorrichtung ausgeschieden wird.

In der Ausführungsform gemäß Fig. 5 sind die Achsen der jeweiligen ersten Walzenkörper 7 in vertikaler Richtung mit einem Abstand A abgestützt, wodurch die Trennebene der Trennstrecke 11 zumindest bereichsweise eine der Abstufung ähnlich Fig. 2 bzw. der Neigung ähnlich Fig. 3 entsprechende Abstufung erhält. Außerdem ist mit dem Abstand A erreicht, daß der Walzenkörper 8 ungehindert in Pfeilrichtung 35 verschwenkbar ist und ein Spalt S zur nächsten Gruppe der Walzenkörper vorhanden ist, der einen störungsfreien Umlauf der Bauteile in allen Betriebsstellungen gewährleistet.

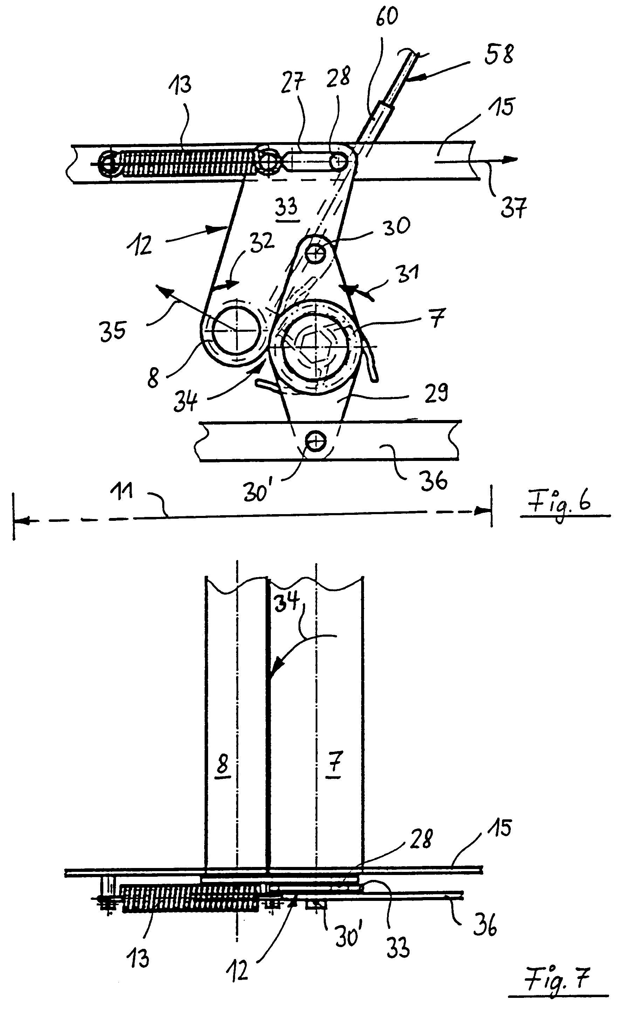

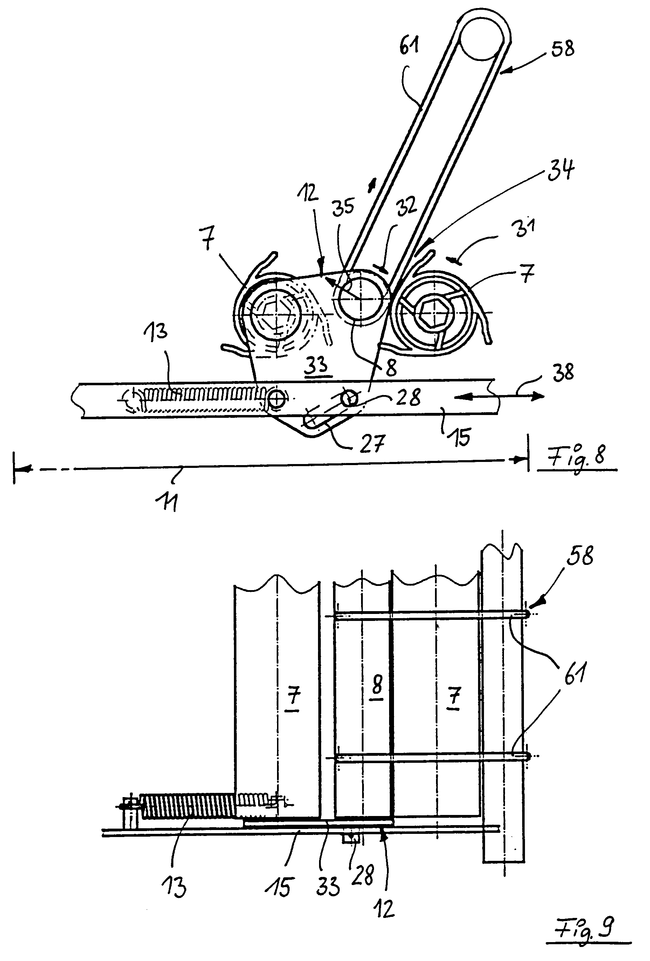

In Fig. 6 und Fig. 7 ist eine zweite Ausführungsform der Verstellmöglichkeiten im Bereich der Walzenkörper 7,8 dargestellt, wobei die von den Führungsbolzen 28 des Stellgliedes 15 durchgriffenen Langlöcher 27 und die Federn 13 in einer Ebene angeordnet sind. Außerdem sind die Zwischenglieder 29 bei 30' an einem weiteren Stellglied 36 unterhalb der Walzenkörper 7,8 angelenkt.

Unter Einwirkung einer gegen die Zugkraft der Feder 13 wirksamen Stellkraft 37 kann auch hier der Arbeitsspalt 34 zwischen den beiden Walzenkörpern 7,8 eingestellt werden. Ferner wirkt die Feder 13 beim Durchtritt eines Steines 5 oder dgl. großen Beimengungsteile durch den Arbeitsspalt 34 als ein Sicherheitsglied.

Darüber hinaus ist das Zwischenglied 29 um die Achse des ersten Walzenkörpers 7 der Gruppe mittels des Stellgliedes 36 schwenk- und feststellbar, so daß in Verbindung mit einer Verstellung des Stellgliedes 15 die Höhenlage des zweiten Walzenkörpers 8 zu seinem ersten Walzenkörper 7 in der Gruppe verstellbar ist, um die Aggressivität des Trennvorgangs zu beeinflussen.

In Fig. 8 und 9 ist eine dritte Ausführungsform der Versteilvorrichtung im Bereich einer Gruppe von Walzenkörpern 7,8 dargestellt, bei der das Stellglied 15 unterhalb der von den Walzenkörpern 7,8 gebildeten Trennstrecke 11 angeordnet ist. Das hier nur von einem Schwenkglied 33 gebildete Tragteil 12 ist jeweils um die Achse des in Förderrichtung nachgeordneten ersten Walzenkörpers 8 einer nachfolgenden Gruppe schwenkbar abgestützt und ermöglicht so bei Bewegung des Stellgliedes 15 in Pfeilrichtung 38 eine Einstellung des Arbeitsspaltes zwischen den Walzenkörpern 7,8 innerhalb einer Gruppe. Die Federn 13 übernehmen auch hier die schon geschilderten Funktionen.

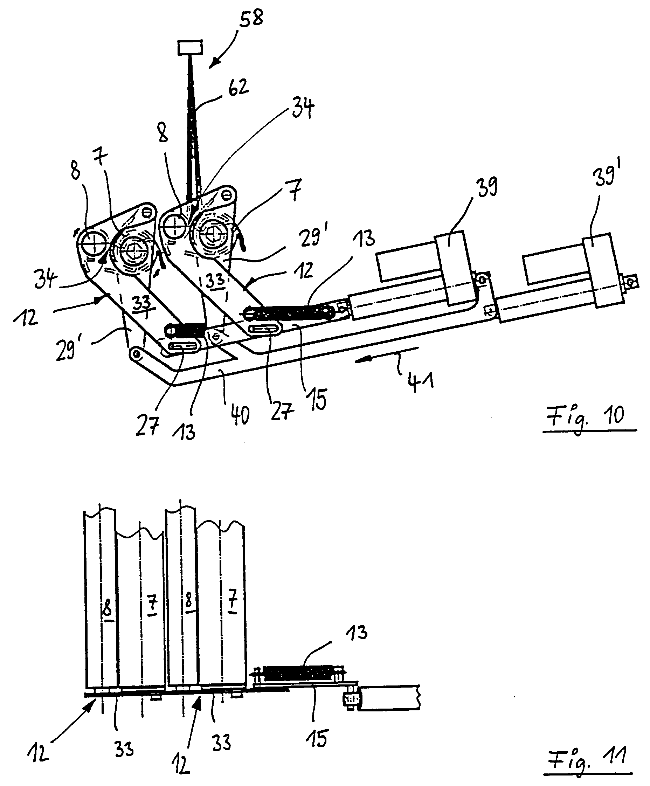

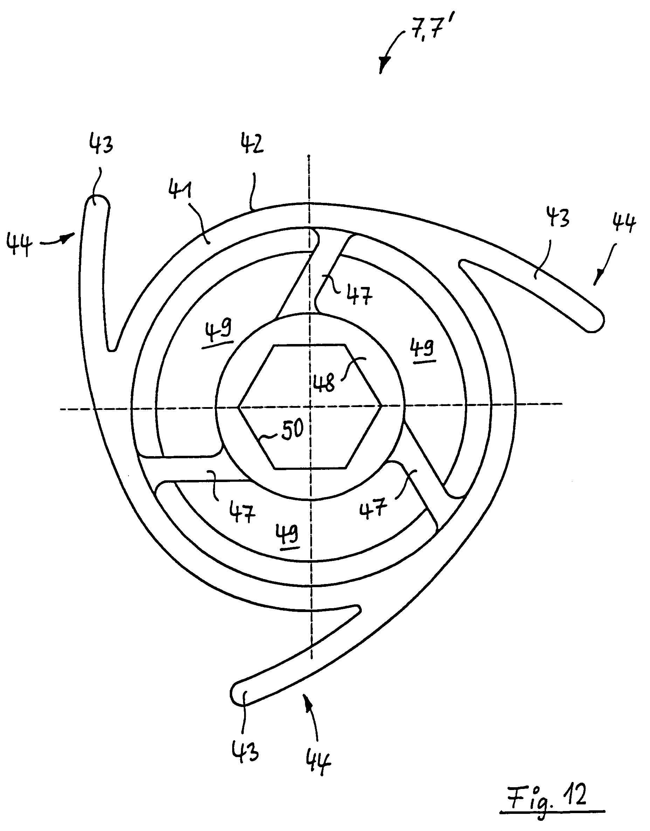

In Fig. 10 und 11 ist eine weitere Ausführungsform der Verstellvorrichtung jeweiliger Gruppen von Walzenkörpern 7,8 veranschaulicht. Bei dieser Ausführung ist das Zwischenglied 29' mit einem das Stellglied 15 mitsamt dessen Antrieb 39 abstützenden Koppelglied 40 verbunden, wobei mehrere hintereinander angeordnete Zwischenglieder 29' gemeinsam verschwenkbar sind. Bei einer Bewegung des Koppelgliedes 40 in Pfeilrichtung 41 mittels eines Antriebs 39' werden die Walzenkörper 8 der Gruppe in der dargestellten Arbeitsstellung konzentrisch um den ersten Walzenkörper 7 der Gruppe verschwenkt, so daß diese unter Beibehaltung des konstanten Arbeitsspaltes 34 eine erhöhte Position gegenüber dem ersten Walzenkörper 7 einnehmen. Beim vorbeschriebenen Eindringen eines Steines oder dgl. harten Gegenstandes in den Arbeitsspalt 34 kann der jeweils zweite Walzenkörper 8 einer Gruppe mit seinem Schwenkteil 33 gegen die Wirkung der Feder 13 in eine den Arbeitsspalt 34 vergrößernde Stellung verschwenkt und nach dem Auswurf des Steines in die Arbeitsposition zurückgeführt werden.

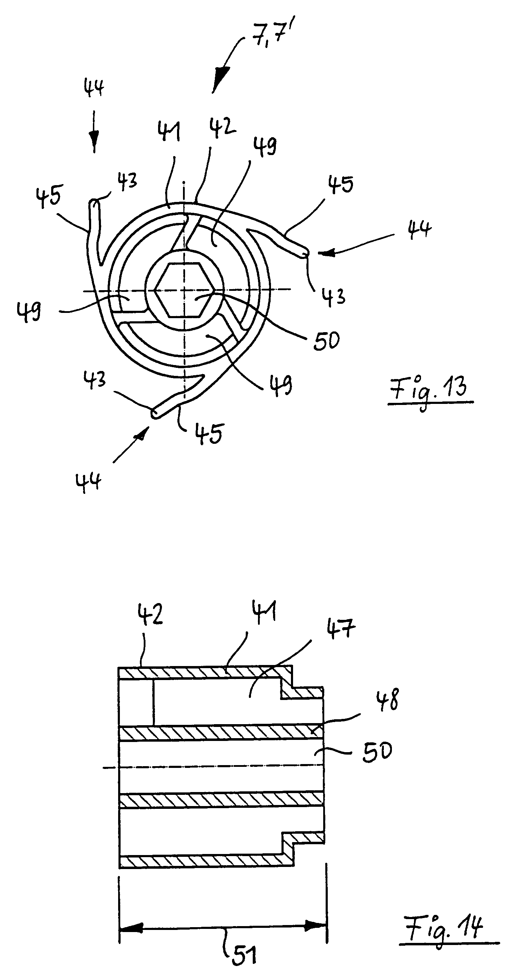

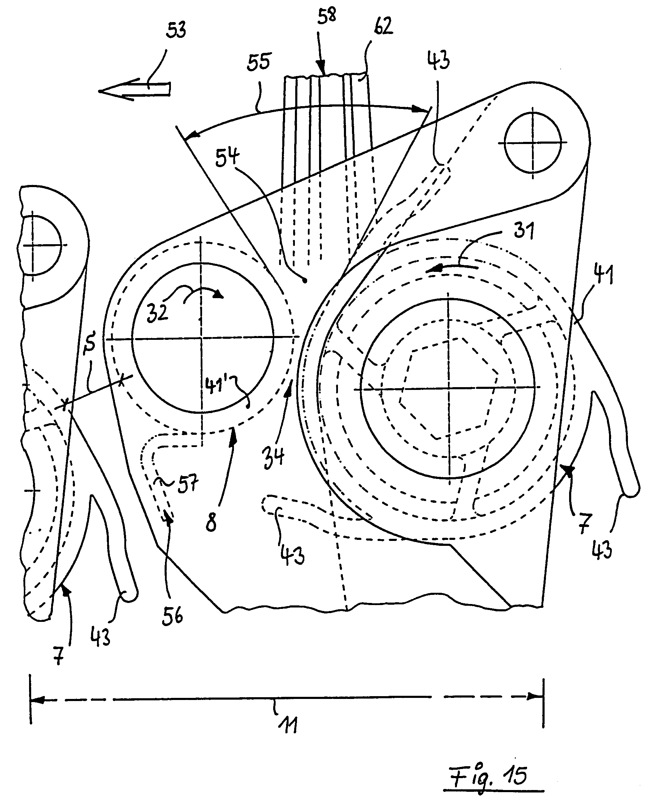

In Fig. 12 ist eine Ausführung der jeweils ersten Walzenkörper 7,7' in einer vergrößerten Einzeldarstellung veranschaulicht, bei der der Walzenkörper jeweils einen elastisch verformbaren Mantelteil 41 aufweist. Am Umfang 42 der Walzenkörper 7,7' sind dabei mehrere über die Kontur des zylindrischen Mantelteils 41 vorstehende Ansatzteile 44 vorgesehen, die als Förderlippen 43 ausgebildet sind. Bei den Walzenkörpern 7,7' gemäß Fig. 12 und 13 sind auf dem Umfang 42 des Mantelteils 41 jeweils drei um 120° versetzt angeordnete Förderlippen 43 angeformt, die jeweils tangential in den Mantelteil 41 einlaufen. Die Förderlippen 43 gemäß Fig. 13 weisen dabei einen zurückspringenden Bereich 45 auf, mit dem die Trenn- und Förderwirkung des Walzenkörpers 7,7' in der Einbaulage (Fig. 15) verstärkt werden kann.

Der Mantelteil 41 der jeweiligen Walzenkörper 7,7' gemäß Fig. 12 und 13 ist über mehrere elastische Stützspeichen 47 mit einem inneren Nabenteil 48 verbunden. Damit ist in Umfangsrichtung der Walzenkörper 7,7' zwischen den Stützspeichen 47 jeweils eine Deformationskammer 49 gebildet und die Förderlippen 43 sind in zweckmäßiger Ausführung jeweils im Bereich der Deformationskammern 49 dem Mantelteil 41 zugeordnet. Die Stützspeichen 47 sind einstückig mit dem Nabenteil 48 ausgeführt und ragen annähernd tangential von diesem so ab, daß bei Deformation der Mantelfläche 41 während des Trennvorganges die Stützspeichen 47 in eine vorgegebene Richtung verformt werden.

Die Walzenkörper 7,8 sind auf einer von einem jeweiligen Innensechskant 50 umfaßten Mehrkantwelle (nicht dargestellt) abgestützt, wobei die Walzenkörper 7,7' bevorzugt von auf der Mehrkantwelle aufgereihten Walzenkörperabschnitten 51 (Fig. 14) gebildet sind. Damit ist sowohl die Montage der Walzenkörper 7,7' als auch eine schnelle Auswechslung zu Reparaturzwecken möglich.

In Fig. 15 veranschaulicht eine vergrößerte Ausschnittsdarstellung im Bereich einer Gruppe von Walzenkörpern 7,8 die geometrischen Verhältnisse sowohl im Bereich des Arbeitsspaltes 34 als auch im Bereich des zwischen den Gruppen befindlichen Spaltes S, wobei deutlich wird, daß der in Richtung 53 der Trennstrecke 11 jeweils erste Walzenkörper 7,7' im Bereich seiner von der Mantelfläche 41 gebildeten Oberseite eine zum Kartoffelabgabeende 6 hin gerichtete Umlaufbewegung 31 ausführt und während eines jeden Umlaufs den im Zwickel 54 zwischen den Walzenkörpern 7,8 der Gruppe befindlichen Kartoffeln mit jeder Förderlippe einen verstärkten Fördervorschub vermittelt. Dabei wirken die elastischen Förderlippen 43 als zusätzliches Förderglied derart, daß diese beim Einlaufen in den Bereich des Zwickels 54 eine Verengung des Einlaufwinkels 55 bewirken und über ihre Federwirkung den beabsichtigten Förderimpuls auf die Kartoffeln in Förderrichtung 53 ausüben. Die Beimengungen 4,5 werden im Bereich des Zwickels 54 durch die Verengung des Einlaufwinkels 55 eingeklemmt und durch den Arbeitsspalt 34 nach unten ausgetragen.

Die Wirksamkeit der Förderlippen 43 kann insbesondere dadurch zuverlässig aufrechterhalten werden, daß im Umlaufbereich der jeweiligen Walzenkörper 8 ein zumindest bereichsweise auf diese einwirkender Abstreifer 56 vorgesehen ist. Der Abstreifer 56 ist dabei in zweckmäßiger Ausbildung als ein unterhalb des zweiten Walzenkörpers 8 angeordneter und in die Bewegungsbahn der Förderlippen 43 vorstehender Profilkörper 57 ausgebildet.

In den vorbeschriebenen Ausführungsformen der Vorrichtung 1,1' ist jeweils oberhalb der die Trennstrecke 11 bildenden Walzenkörper 7,8 zumindest ein allgemein mit 58 bezeichneter Guteinweiser vorgesehen, wobei dieser gemäß Fig. 5 als eine herabhängende Führungsbahn 59, gemäß Fig. 6 als eine Gummiplatte 60, gemäß Fig. 8 als eine Rundschnur 61 sowie gemäß Fig. 10 und 15 als eine Gummibürste 62 ausgebidet sein kann.

Die vergrößerte Darstellung gemäß Fig. 15 verdeutlicht die Ausbildung des jeweils zweiten Walzenkörpers 8 der jeweiligen Gruppe, bei der dieser im Bereich seines Mantelteils 41' mit einer gleichmäßigen Elastomerschicht versehen sein kann, die im Bereich des Arbeitspalts 34 mit dem weicheren, ersten Walzenkörper 7 zusammenwirkt.

Es ist aber auch möglich, die jeweils zweiten Walzenkörper 8 als unnachgiebige Teile auszuführen oder ihnen eine den jeweils ersten Walzenkörpern 7,7' entsprechende Ausgestaltung zu geben. Der Arbeitsspalt 34 richtet sich in seiner Größe nach dem gewünschten Trennergebnis und den Beimengungsverhältnissen, wobei bei entsprechender Weichheit der Walzenmäntel 41,41' auch die Möglichkeit besteht, die beiden Walzenkörper jeder Gruppe schon in der Grundstellung in gegenseitigem Verformungseingriff arbeiten zu lassen.

Die in den Umlaufrichtungen 31,32 gegenläufigen Gruppen von Walzenkörpern 7,7',8,8' können über einzeln oder gruppenweise einstellbare Drehzahlen in ihrer Aggressivität beim Trennvorgang so verändert werden, daß mit geringem Aufwand eine Anpassung an unterschiedliche Trennaufgaben erreicht ist. Beispielsweise kann durch eine Erhöhung der Drehzahl des zweiten Walzenkörpers 8,8' gegenüber der des ersten Walzenkörpers 7,7' die Aggressivität erhöht bzw. bei entsprechender Verringerung der Drehzahl des zweiten Walzenkörpers 8,8' eine geringere Aggressivität eingestellt werden.

## Patentansprüche

1. Vorrichtung zum Trennen von Kartoffeln (4) von Beimengungen (5) wie Erdreich, Kluten, Steinen, Kraut od. dgl., insbesondere für Kartoffelerntemaschinen, mit einer Anzahl von Walzenkörpern (7,7',8,8'), die parallelachsig nebeneinander angeordnet sind, paarweise gegenläufig angetrieben umlaufende Gruppen bilden und gemeinsam eine sich von einem Gutaufgabeende (2) zu einem Kartoffelabgabeende (6) erstreckende Trennstrecke (11;17,18) einnehmen, zu der sie quer ausgerichtet sind, dadurch gekennzeichnet, daß der in Richtung (53) der Trennstrecke (11;17,18) jeweils erste Walzenkörper (7,7') jeder Gruppe eine Querschnittsform aufweist, die während eines jeden Umlaufs auf im Zwickel (54) zwischen den Walzenkörpern (7,7',8,8') der Gruppe befindliche Kartoffeln (4) zumindest einmal einen verstärkten Fördervorschub ausübt.

2. Vorrichtung nach Anspruch 1, dadurch gekennzeichnet, daß der in Richtung (53) der Trennstrecke (11;17,18) jeweils erste Walzenkörper (7,7') jeder Gruppe im Bereich seiner Oberseite (42) eine zum Kartoffelabgabeende (6) hin gerichtete Umlaufbewegung (31) ausführt.

3. Vorrichtung nach Anspruch 1 oder 2, dadurch gekennzeichnet, daß die Trennstrecke (11;17,18) zwischen einer horizontalen und einer zum Kartoffelabgabeende (6) hin geneigten Arbeitsstellung verstellbar ist.

4. Vorrichtung nach einem der Ansprüche 1 bis 3, dadurch gekennzeichnet, daß die Trennstrecke (11) in zumindest zwei Teilbereiche (17,18) mit einer Abstufung (19) zwischen diesen zum Kartoffelabgabeende (6) hin unterteilt ist.

5. Vorrichtung nach einem der Ansprüche 1 bis 4, dadurch gekennzeichnet, daß der zweite Walzenkörper (8,8') jeder Gruppe auf einem Kreisbogen um die Achse eines jeweils benachbarten ersten Walzenkörpers (7,7') in unterschiedliche Arbeitsstellungen verstellbar abgestützt ist.

6. Vorrichtung nach einem der Ansprüche 1 bis 5, dadurch gekennzeichnet, daß der Arbeitsabstand zwischen den Achsen der Walzenkörper (7,8) jeder Gruppe einstellbar ist.

7. Vorrichtung nach einem der Ansprüche 1 bis 6, dadurch gekennzeichnet, daß der Arbeitsabstand der Achse des ersten Walzenkörpers (7) jeder Gruppe zur Achse des zweiten Walzenkörpers (8) der in der Trennstrecke (11) jeweils vorgeordneten Gruppe einstellbar ist.

8. Vorrichtung nach einem der Ansprüche 1 bis 7, dadurch gekennzeichnet, daß die Abstände zwischen den eine Gruppe bildenden Walzenkörpern (7,8) gemeinsam verstellbar sind.

9. Vorrichtung nach einem der Ansprüche 1 bis 8, dadurch gekennzeichnet, daß die Abstände zwischen den Achsen benachbarter Walzenkörper (7,8) zwischen einem eingestellten Arbeitsmaß (34) und einem vergrößerten Sicherheitsmaß federnd veränderlich sind.

10. Vorrichtung nach einem der Ansprüche 1 bis 9, dadurch gekennzeichnet, daß der zweite Walzenkörper (8,8') jeder Gruppe an einem schwenkbar abgestützten Tragteil (12) gelagert ist, an dem jeweils unter Federvorspannung ein am Vorrichtungsgestell (14) abgestütztes Stellglied (15) angreift.

11. Vorrichtung nach einem der Ansprüche 1 bis 10, dadurch gekennzeichnet, daß das Tragteil (12) im Bereich der Verbindung mit dem Stellglied (15) ein Langloch (27) aufweist, in das ein Stellbolzen (28) des Stellgliedes (15) eingreift, und mit einem Federglied (13) verbunden ist, das den Tragteil (12) in seiner durch den Stellbolzen (28) vorgegebenen Arbeitsstellung hält.

12. Vorrichtung nach Anspruch 10 oder 11, dadurch gekennzeichnet, daß das Tragteil (12) an einem um die Achse des ersten Walzenkörpers (7,7') jeder Gruppe schwenkbar abgestützten Zwischenglied (29) schwenkbar gelagert ist.

13. Vorrichtung nach einem der Ansprüche 10 bis 12, dadurch gekennzeichnet, daß die Zwischenglieder (29') mit einem das Stellglied (15) für die Tragteile (12) abstützenden Koppelglied (40) verbunden sind, durch das die Zwischenglieder (29') gemeinsam verschwenkbar sind.

14. Vorrichtung nach einem der Ansprüche 1 bis 13, dadurch gekennzeichnet, daß die Walzenkörper (7,7',8,8') einen elastisch verformbaren Mantelteil (41;41') aufweisen.

15. Vorrichtung nach Anspruch 14, dadurch gekennzeichnet, daß der erste Walzenkörper (7) jeder Gruppe am Umfang (42) mit zumindest einer über die Kontur des zylindrischen Mantelteils (41) vorstehenden Förderlippe (43), -rippe oder dgl. Ansatzteil (44) versehen ist.

16. Vorrichtung nach Anspruch 14 oder 15, dadurch gegennzeichnet, daß auf dem Umfang des Mantelteils (41) drei um 120° versetzt angeordnete Förderlippen (43) vorgesehen sind.

17. Vorrichtung nach einem der Ansprüche 14 oder 16, dadurch gekennzeichnet, daß die Förderlippen (43) jeweils tangential in den Mantelteil (41) einlaufen.

18. Vorrichtung nach einem der Ansprüche 14 bis 17, dadurch gekennzeichnet, daß die Förderlippen (43) einen in Umlaufrichtung (31) des Walzenkörpers (7,7') vor- oder zurückspringenden Bereich (45) aufweisen.

19. Vorrichtung nach einem der Ansprüche 14 bis 18, dadurch gekennzeichnet, daß der Mantelteil (41) des ersten und/oder zweiten Walzenkörpers (7,8) jeder Gruppe über elastische Stützspeichen (47) mit einem inneren Nabenteil (48) verbunden ist.

20. Vorrichtung nach Anspruch 19, dadurch gekennzeichnet, daß zwischen den Stützspeichen (47) jeweils eine Deformationskammer (49) gebildet ist und die Förderlippen (43) jeweils im Bereich einer Deformationskammer (49) dem Mantelteil (41) zugeordnet sind.

21. Vorrichtung nach Anspruch 19 oder 20, dadurch gekennzeichnet, daß die Stützspeichen (47) einstückig mit dem Nabenteil (48) ausgeführt sind und tangential von diesen abragen.

22. Vorrichtung nach einem der Ansprüche 19 bis 21, dadurch gekennzeichnet, daß der Walzenkörper (7,7') eine Mehrkantwelle und auf diese aufgereihte Walzenkörperabschnitte (51) umfaßt.

23. Vorrichtung nach einem der Ansprüche 1 bis 22, dadurch gekennzeichnet, daß im Bereich der Walzenkörper (7,7',8,8') jeder Gruppe jeweils zumindest ein Abstreifer (56) vorgesehen ist.

24. Vorrichtung nach Anspruch 23, dadurch gekennzeichnet, daß der Abstreifer (56) als ein unterhalb des zweiten Walzenkörpers (8,8') angeordneter und in die Bewegungsbahn der Förderlippen (43) vorstehender Profilkörper (57) ausgebildet ist.

25. Vorrichtung nach einem der Ansprüche 1 bis 24, dadurch gekennzeichnet, daß oberhalb der von den Walzenkörpern (7,7',8,8') gebildeten Trennstrecke (11;17,18) zumindest ein Guteinweiser (58) vorgesehen ist.

26. Vorrichtung nach einem der Ansprüche 1 bis 25, dadurch gekennzeichnet, daß die Drehzahlen der Walzenkörper (7,7',8,8') einzeln und/oder in jeder Gruppe einstellbar sind.

## Claims

1. An apparatus for separating potatoes (4) from other materials (5) such as earth, clods, stones, weeds or the like, particularly for potato harvesting machines, with a number of rolling bodies (7, 7', 8, 8'), disposed beside one another on parallel axes, and form rotating groups driven in opposite directions in pairs and which jointly occupy a separating path (11; 17, 18) extending from a material input end (2) to a potato delivery end (6), characterised in that whichever is in the direction (53) of the separating path (11; 17, 18) the first rolling body (7, 7') of each group has a cross-sectional form which during each rotation exerts an amplified forward feed at least once on potatoes (4) disposed at the area of intersection (54) between the roller bodies (7, 7', 8, 8') of the group.

2. An apparatus according to claim 1, characterised in that whichever, in the direction (53) of the separating path (11; 17, 18), is the first roller body (7, 7') of each group performs in the region of its upper side (42) a rotary movement (31) directed towards the potato delivery end (6).

3. An apparatus according to claim 1 or 2, characterised in that the separating path (11; 17, 18) is adjustable between a horizontal working position and one which is inclined in the direction of the potato delivery end (6).

4. An apparatus according to one of claims 1 to 3, characterised in that the separating path (11) is sub-divided into at least two partial areas (17, 18) with a step (19) between them in the direction of the potato delivery end (6).

5. An apparatus according to one of claims 1 to 4, characterised in that the second roller body (8, 8') in each group is supported in such a way as to be adjustable into different working positions on an arc around the axis of whichever is the adjacent first roller body (7, 7').

6. An apparatus according to one of claims 1 to 5, characterised in that the working distance between the axes of the roller body (7, 8) of each group is adjustable.

7. An apparatus according to one of claims 1 to 6, characterised in that the working distance between the axis of the first roller body (7) of each group and the axis of the second roller body (8) of whichever group precedes it in the separating path (11) is adjustable.

8. An apparatus according to one of claims 1 to 7, characterised in that the distances between the roller bodies (7, 8) forming a group are jointly adjustable.

9. An apparatus according to one of claims 1 to 8, characterised in that the distances between the axes of adjacent roller bodies (7, 8) are resiliently variable between a preset working measurement (34) and an increased safety measurement.

10. An apparatus according to one of claims 1 to 9, characterised in that the second roller body (8, 8') of each group is mounted on a pivotally supported carrier part (12) engaged in each case under initial spring tension by a positioning member (15) supported on the frame (14) of the apparatus.

11. An apparatus according to one of claims 1 to 10, characterised in that the carrier part (12) has in the region of the connection with the positioning member (15) an elongated hole (27) into which engages a positioning bolt (28) on the positioning member (15) and is connected to a spring member (13) which maintains the carrier part (12) in its working position which is predetermined by the positioning bolt (28).

12. An apparatus according to claim 10 or 11, characterised in that the carrier part (12) is pivotally mounted on an intermediate member (29) supported to pivot about the axis of the first roller body (7, 7') of each group.

13. An apparatus according to one of claims 10 to 12, characterised in that the intermediate members (29') are connected to a coupling member (40) supporting the positioning member (15) for the carrier parts (12) and by which the intermediate members (29') are capable of being jointly pivoted.

14. An apparatus according to one of claims 1 to 13, characterised in that the roller bodies (7, 7', 8, 8') comprise an elastically deformable shell part (41, 41').

15. An apparatus according to claim 14, characterised in that the first roller body (7) of each group is provided on the periphery (42) with at least one conveyor lip (43), rib or like extension part (44) projecting beyond the contours of the cylindrical shell part (41).

16. An apparatus according to claim 14 or 15, characterised in that there are on the periphery of the shell part (41) three conveyor lips (43) which are offset by 120° in respect of one another.

17. An apparatus according to one of claims 14 or 16, characterised in that the conveyor lips (43) in each case run tangentially into the shell part (41).

18. An apparatus according to one of claims 14 to 17, characterised in that the conveyor lips (43) have an area (45) which springs forward or backwards in the direction (31) of rotation of the roller body (7, 7').

19. An apparatus according to one of claims 14 to 18, characterised in that the shell part (41) of the first and/or second roller body (7, 8) of each group is connected to an inner hub part (48) via resilient supporting spokes (47).

20. An apparatus according to claim 19, characterised in that between the supporting spokes (47) there is in each case a deformation chamber (49) and the conveyor lips (43) are associated with the shell part (41) in each case in the region of a deformation chamber (49).

21. An apparatus according to claim 19 or 20, characterised in that the supporting spokes (47) are constructed in one piece with the hub part (48) and project tangentially from these latter.

22. An apparatus according to one of claims 19 to 21, characterised in that the roller body (7, 7') comprises a polygonal shaft and roller body portions (51) arranged on this latter.

23. An apparatus according to one of claims 1 to 22, characterised in that in the region of the roller bodies (7, 7', 8, 8') of each group there is in each case at least one scraper (56).

24. An apparatus according to claim 23, characterised in that the scraper (56) is constructed as a profiled body (57) disposed beneath the second roller body (8, 8') and projecting into the path of movement of the conveyor lips (43).

25. An apparatus according to one of claims 1 to 24, characterised in that at least one material infeed means (58) is provided above the separating path (11; 17, 18) formed by the roller bodies (7, 7', 8, 8').

26. An apparatus according to one f claims 1 to 25, characterised in that the rotary speeds of the roller bodies (7, 7', 8, 8') can be adjusted individually and/or in each group.

## Revendications

1. Dispositif pour séparer des pommes de terre (4) d'autres matières (5) telles que de la terre, des mottes, des cailloux, des fanes ou des matière analogues, en particulier pour des arracheuses de pommes de terre, comprenant un certain nombre de corps cylindriques (7, 7', 8, 8'), qui sont disposés avec leurs axes parallèles les uns à côté des autres, qui, par paires, forment des groupes rotafifs entraînés en sens contraires et qui occupent ensemble une section de séparation (11; 17, 18) s'étendant d'une extrémité de chargement de récolte (2) à une extrémité de déchargement de pommes de terre (6) transversalement à laquelle lesdits corps cylindres sont orientés, caractérisé en ce que chaque premier corps cylindrique (7, 7') de chaque groupe dans le sens (53) de la section de séparation (11; 17, 18) a une forme en coupe transversale qui fait avancer avec plus de force, au moins une fois à chaque tour, les pommes de terre (4) se trouvant dans l'emprise (54) entre les corps cylindriques (7, 7', 8, 8') du groupe.

2. Dispositif suivant la revendication 1, caractérisé en ce que chaque premier corps cylindrique (7, 7') de chaque groupe dans le sens (53) de la section de séparation (11; 17, 18) est animé dans la zone de son côté supérieur (42), d'un mouvement de rotation (31) dirigé vers l'extrémité de déchargement de pommes de terre (6).

3. Dispositif suivant la revendication 1 ou 2, caractérisé en ce que la section de séparation (11; 17, 18) peut être réglée entre une position de travail horizontale et une position de travail inclinée par rapport à l'extrémité de déchargement de pommes de terre (6).

4. Dispositif suivant l'une quelconque des revendications 1 à 3, caractérisé en ce que la section de séparation (11) est divisée en au moins deux zones partielles (17, 18) par un gradin (19) entre ces zones. descendant en direction de l'extrémité de déchargement de pommes de terre (6).

5. Dispositif suivant l'une quelconque des revendications 1 à 4, caractérisé en ce que le deuxième corps cylindrique (8, 8') de chaque groupe est monté réglable dans différentes positions de travail suivant un arc de cercle autour de l'axe d'un premier corps cylindrique respectif voisin (7, 7').

6. Dispositif suivant l'une quelconque des revendications 1 à 5, caractérisé en ce que la distance de travail entre les axes des corps cylindriques (7, 8) de chaque groupe est réglable.

7. Dispositif suivant l'une quelconque des revendications 1 à 6, caractérisé en ce que la distance de travail séparant l'axe du premier corps cylindrique (7) de chaque groupe, de l'axe du deuxième corps cylindrique (8) du groupe précédent dans la section de séparation (11), est réglable.

8. Dispositif suivant l'une quelconque des revendications 1 à 7, caractérisé en ce que les distances entre les corps cylindriques (7, 8) formant un groupe peuvent être réglées ensemble.

9. Dispositif suivant l'une quelconque des revendications 1 à 8, caractérisé en ce que les distances entre les axes de corps cylindriques voisins (7, 8) sont variables de manière élastique entre une valeur de travail réglée (34) et une valeur plus grande ou de sécurité.

10. Dispositif suivant l'une quelconque des revendications 1 à 9, caractérisé en ce que le deuxième corps cylindrique (8, 8') de chaque groupe est monté à rotation sur un élément de support (12) qui peut pivoter et sur lequel un organe de réglage (15) prenant appui sur le châssis du dispositif (14) agit chaque fois sous la prétension d'un ressort.

11. Dispositif suivant l'une quelconque des revendications 1 à 10, caractérisé en ce que l'élément de support (12) présente, dans la zone de la liaison à l'organe de réglage (15), une boutonnière (27), dans laquelle un doigt de réglage (28) de l'organe de réglage (15) s'engage, et en ce qu'elle est reliée à un élément-ressort (13) qui maintient l'élément de support (12) dans sa position de travail prédéterminée par le doigt de réglage (28).

12. Dispositif suivant la revendication 10 ou 11, caractérisé en ce que l'élément de support (12) est articulé à un élément intermédiaire (29) monté à pivotement autour de l'axe du premier corps cylindrique (7, 7') de chaque groupe.

13. Dispositif suivant l'une quelconque des revendications 10 à 12, caractérisé en ce que les éléments intermédiaires (29') sont reliés à un élément d'accouplement (40) supportant l'organe de réglage (15) pour les éléments de support (12) et grâce auquel les éléments intermédiaires (29') peuvent être entraînés ensemble en pivotement.

14. Dispositif suivant l'une quelconque des revendications 1 à 13, caractérisé en ce que les corps cylindriques (7, 7', 8, 8') présentent une chemise (41; 41') pouvant être déformée élastiquement.

15. Dispositif suivant la revendication 14, caractérisé en ce que le premier corps cylindrique (7) de chaque groupe est pourvu sur sa périphérie (42) d'au moins une lèvre de transport (43), ailette de transport ou autre appendice (44) du même type en saillie sur le contour de la chemise cylindrique (41).

16. Dispositif suivant la revendication 14 ou 15, caractérisé en ce que sur la périphérie de la chemise (41) sont prévues trois lèvres de transport (43) décalées de 120°.

17. Dispositif suivant la revendication 14 ou 16, caractérisé en ce que les lèvres de transport (43) arrivent tangentiellement dans la chemise (41).

18. Dispositif suivant l'une quelconque des revendications 14 à 17, caractérisé en ce que les lèvres de transport (43) présentent une zone (45) en saillie vers l'avant ou vers l'arrière dans le sens de rotation (31) du corps cylindrique (7, 7').

19. Dispositif suivant l'une quelconque des revendications 14 à 18, caractérisé en ce que la chemise (41) du premier et/ou du deuxième corps cylindriques (7, 8) de chaque groupe est reliée à une partie interne de moyeu (48) par l'intermédiaire de rayons d'appui élastiques (47).

20. Dispositif suivant la revendication 19, caractérisé en ce qu'une chambre de déformation (49) est chaque fois formée entre les rayons d'appui (47) et en ce que les lèvres de transport (43) sont associées à la chemise (41) chaque fois dans la zone d'une chambre de déformation (49).

21. Dispositif suivant la revendication 19 ou 20, caractérisé en ce que les rayons d'appui (47) sont d'une seule pièce avec la partie de moyeu (48) et dépassent tangentiellement de celle-ci.

22. Dispositif suivant l'une quelconque des revendications 19 à 21, caractérisé en ce que le corps cylindrique (7, 7') comprend un arbre polygonal sur lequel des segments de corps cylindriques (51) sont disposés les uns à côté des autres.

23. Dispositif suivant l'une quelconque des revendications 1 à 22, caractérisé en ce que dans la zone des corps cylindriques (7, 7', 8, 8') de chaque groupe est prévu chaque fois au moins un racloir (56).

24. Dispositif suivant la revendication 23, caractérisé en ce que le racloir (56) se présente sous la forme d'un corps profilé (57) disposé en dessous du deuxième corps cylindrique (8, 8') et faisant saillie dans la trajectoire de déplacement des lèvres de transport (43).

25. Dispositif suivant l'une quelconque des revendications 1 à 24, caractérisé en ce qu'au moins un dispositif de guidage de produit (58) est prévu au-dessus de la section de séparation (11; 17, 18) formée par les corps cylindriques (7, 7', 8, 8').

26. Dispositif suivant l'une quelconque des revendications 1 à 25, caractérisé en ce que les vitesses de rotation des corps cylindriques (7, 7', 8, 8') peuvent être réglées individuellement et/ou dans chaque groupe.
